# EUROPÄISCHE PATENTANMELDUNG

(11) **EP 2 397 299 A2**
(43) Veröffentlichungstag der Anmeldung: **21.12.2011**
(21) Anmeldenummer: 11004882.4
(22) Anmeldetag: 15.06.2011
(51) Int. Cl.: B29C 45/14, B29C 53/04, B65D 1/28

(54) **Kunststoffschale und Herstellungsverfahren**

(30) Priorität: 15.06.2010 DE 102010024383
(71) Anmelder: Ilsemann Automation Niederlassung der Heino Ilsemann GmbH, 28279 Bremen (DE)
(72) Erfinder: Kapp, Daniel, 28209 Bremen (DE)
(74) Vertreter: Philipp, Matthias

(57) **Zusammenfassung**

Verfahren zum Herstellen einer Kunststoffschale, die eine mit einer Barrierefolie versehene Wand aufweist, mit den Schritten: Bilden eines räumlichen Formkörpers aus einer zunächst ebenen Barrierefolie, dessen Form der Wand der herzustellenden Kunststoffschale entspricht, wobei benachbarte Teilbereiche überlappend aufeinandergefaltet werden, thermisches Versiegelen des Folienkörpers, Anordnen des Folienkörpers auf einem Kern einer Spritzgießform, ggf. Anordnen eines Etiketts auf einer Formwand der Spritzgießform, Anordnen des auf dem Kern gehaltenen Folienkörpers in der Spritzgießform und Schließen der Spritzgießform, Einspritzen von Kunststoff in die Spritzgießform und Erzeugen einer Kunststoffschicht, die innen mit der Barrierefolie verbunden ist.

## Beschreibung

Die Erfindung betrifft ein Verfahren zum Herstellen einer Kunststoffschale, die eine mit einer Barrierefolie versehene Wand aufweist, sowie eine Kunststoffschale mit einer eine Barrierefolie aufweisenden Wand.

Derartige Verfahren und Kunststoffschalen oder -behälter sind in unterschiedlichen Ausführungsformen bekannt, wobei sich die Barrierefolie meist entweder auf einer Innenseite oder auf einer Außenseite der Schale befindet. Beispielsweise aus JP 10156871 ist ein nach dem sogenannten In-Mould-Label-Verfahren hergestellter Behälter bekannt, bei dem sich eine Barrierefolie auf dessen Außenseite befindet.

Insbesondere bei Schalen oder Behältern mit einer in Draufsicht unregelmäßigen Grundform oder Bodenfläche, beispielsweise bei einer abgerundet-dreieckigen Grundform mit ungleichen Seitenlängen, tritt das Problem auf, dass sich die Barrierefolie kaum faltenfrei an einer Außenseite einer Wand anbringen lässt, was ein ästhetisches Problem darstellt. Ein weiteres Problem liegt darin, dass zur Herstellung eines diffusionsdichten Behälters zum Zwecke der Erzielung einer besonders langen Lagerfähigkeit von Inhaltsstoffen wie Nahrungsmittel die Barrierefolie ohne jegliche Fehlstellen den Behälter vollständig und dicht umschließen muss, um zu vermeiden, dass beispielsweise an solchen Stellen, an denen benachbarte Folienränder einander nicht überlappen, Bereiche entstehen, in denen die aus Kunststoff bestehende Behälterwand nicht von der Barrierefolie abgedeckt ist. Außerdem besteht bei einer außen- oder innenseitig aufgebrachten Barrierefolie die Gefahr, dass sich die Folie in Rand- bzw. Kantenbereichen des Behälters von der Kunststoffwand löst.

Die Aufgabe der Erfindung besteht darin, ein Verfahren zum Herstellen einer Kunststoffschale, die eine mit einer Barrierefolie versehene Wand aufweist, anzugeben, bei dem die vorstehend genannten Nachteile zumindest größtenteils überwunden werden. Außerdem soll eine entsprechend verbesserte Kunststoffschale mit einer eine Barrierefolie aufweisenden Wand angegeben werden.

In verfahrensmäßiger Hinsicht wird diese Aufgabe durch ein Verfahren zum Herstellen einer Kunststoffschale gelöst, die eine mit einer Barrierefolie versehene Wand aufweist, mit den Schritten: Bilden eines räumlichen Folienkörpers aus einer zunächst ebenen Barrierefolie, dessen Form der Wand der herzustellenden Kunststoffschale entspricht, wobei benachbarte Teilbereiche der Barrierefolie überlappend aufeinandergefaltet und Überlappungsbereiche gebildet werden, thermisches Versiegeln der Überlappungsbereiche, Anordnen des Folienkörpers auf einem Kern einer Spritzgießform, Anordnen des auf dem Kern gehaltenen Folienkörpers in der Spritzgießform und Schließen der Spritzgießform, Einspritzen von Kunststoff in die Spritzgießform und Erzeugen einer Kunststoffschicht, die innen mit dem Folienkörper verbunden ist.

Das thermische Versiegeln erfolgt bevorzugt vor dem Einspritzen von Kunststoff. Bevorzugt erstreckt sich der Formkörper über einen gesamten Wandbereich der Kunststoffschale, beispielsweise Boden- und Seitenwand oder Seitenwände.

Zweckmäßigerweise wird auf einer Formwand der Spritzgießform ein Etikett angeordnet, bevor die Form geschlossen wird, wobei sich die Kunststoffschicht mit dem Etikett verbindet. Das Etikett bildet dann eine Außenfläche der Kunststoffschale, oder einen Teil davon. Das Etikett kann Barriereeigenschaften haben und einen Bereich der Wand überdecken, an dem sich keine Barrierefolie befindet, beispielsweise eine Boden- oder Seitenwand oder ein Teil davon.

Zweckmäßigerweise ist vorgesehen, dass die Kunststoffschale mit einer weiteren Kunststoffschale, die einen Deckel bildet, verschlossen wird, indem Deckelflanschbereiche von Kunststoffschale und Deckel miteinander verrastet oder versiegelt werden.

Bevorzugt ist vorgesehen, dass beim Anordnen des Formkörpers auf dem Kern eine Entlüftung zwischen Kern und Formkörper vorgenommen wird.

Es ist vorteilhaft, wenn Falten und überlappende Teilbereiche ganz über einen Seitenwandbereich der Schale, insbesondere bis zu oder einschließlich einem Deckelflanschbereich verlaufen. Damit wird eine hervorragende Dichtigkeit erzielt, da die Barrierefolie nicht eingeschnitten werden muss.

Die Aufgabe der Erfindung wird weiterhin durch eine Kunststoffschale gelöst, die eine mit einer Barrierefolie versehene Wand, insbesondere aus gespritztem Kunststoff, aufweist, wobei die Barrierefolie an einer Innenseite der Wand angeordnet ist, wobei die Barrierefolie aus einem zunächst ebenen Zuschnitt überlappend gefaltet und in Überlappungsbereichen gesiegelt ist. Die Wand umfaßt bevorzugt einen gesamten Wandbereich der Kunststoffschale, insbesondere Boden- und Seitenwand oder Seitenwände. Ein Etikett kann an einer Außenseite der Kunststoffschale angeordnet sein, das Barriereeigenschaften haben kann. Das Etikett kann einen Teilbereich der Wand, bspw. eine Boden- oder Seitenwand oder einen Teil davon, der nicht mit Barrierefolie versehen ist, überdecken.

Bevorzugt ist vorgesehen, dass die Kunststoffschale mit einer weiteren Kunststoffschale, die einen Deckel bildet, verschlossen ist, indem Deckelflanschabschnitte von Kunststoffschale und Deckel miteinander verrastet und/oder versiegelt sind. Zweckmäßigerweise kann vorgesehen sein, dass Falten und Überlappungsbereiche ganz über einen Boden- und Seitenwandbereich, insbesondere bis zu einem Deckelflanschbereich verlaufen.

Erfindungsgemäß kann vorgesehen sein, dass die Barrierefolie mindestens eine Barriereschicht mit einer Dicke zwischen 1 und 15 µ, insbesondere zwischen 5 und 10 µ enthält. Die mindestens eine Barriereschicht kann aus Metall, insbesondere Aluminium bestehen. Zweckmäßigerweise ist die Barrierefolie auf mindestens einer Seite mit einer Lack-, Kunststoffoder Kleberschicht mit einer Dicke zwischen 1 und 15 µ, insbesondere zwischen 5 und 10 µ, versehen. Die Kunststoffschicht weist bevorzugt eine Dicke zwischen 0,1 und 2 mm auf.

Die Erfindung wird nachfolgend anhand eines Ausführungsbeispiels erläutert, wobei
- Fig. 1: eine schematische Querschnittsansicht einer erfindungsgemäßen Kunststoffschale zeigt,
- Fig. 2: eine schematische Querschnittsansicht eines erfindungsgemäßen Deckels zeigt.

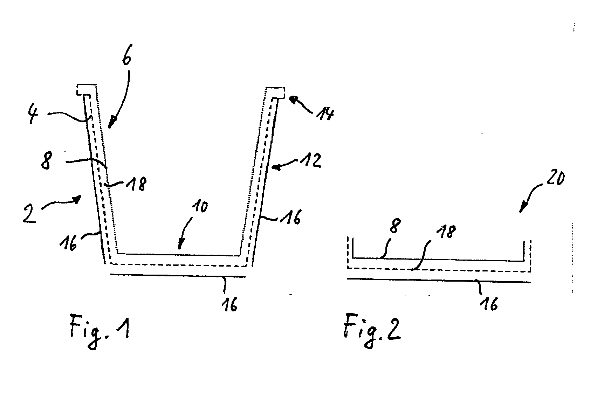

Fig. 1 erläutert die Erfindung anhand einer Kunststoffschale in schematischer Darstellung, wobei die Dicke der Behälterwand gegenüber deren Breiten- und Höhenabmessungen zur Verdeutlichung der Erfindung übertrieben groß dargestellt ist.

Die im Ganzen mit 2 bezeichnete Schale weist eine Wand 4 auf, an deren Innenseite 6 eine Barrierefolie 8 angeordnet ist, so dass die Wand 4 diffusionsdicht ist. Die Barrierefolie bildet eine Innenseite oder Innenfläche der Kunststoffschale.

Die Barrierefolie 8 weist mindestens eine Barriereschicht auf, bei der er sich um eine metallische, etwa aus Aluminium bestehende Schicht mit einer Dicke zwischen etwa 1 µ und 20 µ, insbesondere 5 bis 10 µ handeln kann. Auf der zur Innenseite 6 der Schale weisenden Seite der Barrierefolie, die im Gebrauch der Schale mit einem Produkt in Berührung kommt, ist eine Lack- oder Kunststoffschicht mit einer Dicke im Bereich von 1 bis 20 µ, insbesondere 5 bis 10µ angeordnet, die Beschädigungen der Barriereschicht und einen direkten Kontakt zwischen einem Produkt und der Barriereschicht vermeidet. Auf einer von der Innenseite 6 abgekehrten Außenseite kann eine weitere Lack- oder Kunststoffschicht angeordnet sein, deren Dicke im Bereich von 1 bis 20 µ, insbesondere 5 bis 10 µ liegen kann.

Die Wand der Schale 2 weist einen Bodenbereich 10 und einen Seitenwandbereich 12 auf, der sich von dem Bodenbereich 10 schräg nach oben erstreckt. An einem oberen Ende des Seitenwandbereichs 12 ist die Schale 2 mit einem Deckelflanschbereich 14 versehen, an dem ein Deckel angesiegelt oder aufgerastet werden kann.

Der Bodenbereich 10 oder der Seitenwandbereich 12 oder beide können außenseitig mit einem Etikett 16 nach Art eines In-Mold-Labels versehen sein, wobei das entsprechende Etikett vor Ausführung des Spritzgießvorgangs, mit dem die Schale 2 hergestellt wird, in eine Spritzgießform eingelegt wird und sich beim Einspritzen des heißen Kunststoffmaterials in die Spritzgießform fest mit diesem verbindet.

Zwischen dem Etikett bzw. den Etiketten 16 und der Barrierefolie 8 befindet sich eine Kunststoffschicht 18, deren Dicke in einem Bereich zwischen 0,3 und 2 mm liegen kann. Bei dem Kunststoff kann es sich um ein preisgünstiges Recyklat handeln, da das Kunststoffmaterial selbst aufgrund der Barrierefolie 8 nicht mit einem von der Schale 2 aufzunehmenden Produkt in Berührung kommen kann.

Die Behälterfolie 8 ist aus einem ebenen Folienabschnitt zu einem räumlichen Folienkörper aufgefaltet, wobei sich Überlappungsbereiche und Falten ergeben, die sich ausgehend von dem Bodenbereich 10 , der eben sein kann, vollständig über den Seitenwandbereich 12 erstrecken und zum Deckelflanschbereich 14 verlaufen, so dass eine inhärente Dichtigkeit gegeben ist, weil die Folie nirgends einschnitten ist.

Ein in Fig. 2 dargestellter Deckel 20, der zum Verschließen einer Schale 2 verwendet werden kann, entspricht von seinem grundsätzlichen Aufbau her der Schale 2 und weist eine Barrierefolie 8, eine zentrale Kunststoffschicht 18 und ein Etikett 16 auf. Im aufgesetzten Zustand befindet sich die Barrierefolie 8 innen und das Etikett 16 außen.

Ein Verfahren zum Herstellen einer Schale 2 oder eines Deckels 20 sieht zunächst vor, dass ein räumlicher Folienkörper entsprechend der in Fig. 1 oder 2 dargestellten Barrierefolie 8 aus einem Abschnitt einer ebenen Barrierefolie gebildet wird, wobei die Form des räumlichen Folienkörpers der Innenseite der Wand der herzustellenden Kunststoffschale entspricht. Die Barrierefolie wird bevorzugt so gefaltet, dass sich Überlappungsbereiche und Falten ergeben, die ausgehend von dem Bodenbereich 10 (Fig. 1) ganz über den Seitenwandbereich 12 verlaufen, wobei die Folie nicht eingeschnitten wird und aufgrund der Überlappungsbereiche eine inhärente Dichtigkeit erzielt wird. Der Folienkörper, der auf einem kernähnlichen Faltkörper gefaltet werden kann, wird dann thermisch behandelt, wobei die Überlappungsbereiche der Barrierefolie miteinander versiegelt werden und der Folienkörper eine dauerhafte Form erhält. Ein Deckelflanschbereich 14 kann ebenfalls gebildet werden, wobei die genannten Überlappungsbereiche und Falten vorzugsweise bis zu einem äußeren Rand des Deckelflanschbereichs 14 verlaufen, so dass auch im Deckelflanschbereich eine inhärente Dichtigkeit besteht.

Anschließend wird der so gebildete Folienkörper auf einen Kern einer Spritzgießmaschine aufgeschoben, wobei bei kurzen Taktzeiten eine Entlüftung zwischen Kern und Folienkörper vorgenommen werden kann. Beispielsweise können in dem Kern auf dessen Oberfläche mündende Saugkanäle vorgesehen sein, durch die beim Aufsetzen Luft abgesaugt und ein rasches Aufsetzen des Folienkörpers auf den Kern ermöglicht wird.

In einen entsprechenden Formhohlraum der Spritzgießmaschine wird mindestens ein In-Mold-Label oder Etikett eingelegt und vorzugsweise elektrostatisch gehalten, welches vorzugsweise im Bereich von mindestens einer Eingießöffnung der Spritzgießmaschine ein Loch aufweist, um das Einspritzen der heißen Kunststoffmasse zu ermöglichen.

Anschließend wird die Form nach Einfahren des mit dem Folienkörper bestückten Kerns geschlossen und der Spritzvorgang ausgeführt. Dabei presst das eingespritzte Kunststoffmaterial das Etikett oder die Etiketten gegen eine Außenwand der Spritzgießform, an der sie bereits vor Beginn des Einspritzvorgangs angelegen hatten, und verbindet sich an seiner Außenseite fest mit dem Etikett. Außerdem presst das Kunststoffmaterial den Formkörper aus Barrierefolie fest gegen den Kern, an dem dieser bereits vor Ausführung des Spritzgießvorgangs angelegen hatte, und verbindet sich fest mit diesem. Nach Abkühlung kann die fertige Schale 2 aus der Form entnommen werden.

Die Herstellung eines Deckels 20, der grundsätzlich ebenfalls eine erfindungsgemäße Schale darstellt, erfolgt analog.

### Bezugszeichenliste

- 2: Schale
- 4: Wand
- 6: Innenseite
- 8: Barrierefolie
- 10: Bodenbereich
- 12: Seitenwandbereich
- 14: Deckelflanschbereich
- 16: Etikett
- 18: Kunststoffschicht
- 20: Deckel

## Patentansprüche

1. Verfahren zum Herstellen einer Kunststoffschale (2), die eine mit einer Barrierefolie (8) versehene Wand (4) aufweist, mit den Schritten:
- Bilden eines räumlichen Formkörpers aus einer zunächst ebenen Barrierefolie, dessen Form der Wand (4) der herzustellenden Kunststoffschale (2) entspricht, wobei benachbarte Teilbereiche der Barrierefolie (8) überlappend aufeinandergefaltet und Überlappungsbereiche gebildet werden,
- thermisches Verriegeln der Überlappungsbereiche,
- Anordnen des Folienkörpers auf einem Kern einer Spritzgießform,
- Anordnen des auf dem Kern gehaltenen Folienkörpers in der Spritzgießform und Schließen der Spritzgießform,
- Einspritzen von Kunststoff in die Spritzgießform und Erzeugen einer Kunststoffschicht (18), die innen mit dem Folienkörper verbunden ist.

2. Verfahren nach Anspruch 1, **dadurch gekennzeichnet, dass** das thermische Versiegeln vor dem Einspritzen von Kunststoff erfolgt.

3. Verfahren nach Anspruch 1, **dadurch gekennzeichnet, dass** auf einer Formwand der Spritzgießform ein Etikett (16) angeordnet wird.

4. Verfahren nach einem der vorangehenden Ansprüche, **dadurch gekennzeichnet, dass** die Kunststoffschale (2) mit einer weiteren Kunststoffschale, die einen Deckel (20) bildet, verschlossen wird, indem Deckelflanschbereiche (14) von Kunststoffschale (2) und Deckel (20) miteinander verrastet und/oder versiegelt werden.

5. Verfahren nach einem der vorangehenden Ansprüche, **dadurch gekennzeichnet, dass** beim Anordnen des Formkörpers auf dem Kern eine Entlüftung zwischen Kern und Formkörper vorgenommen wird.

6. Verfahren nach einem der vorangehenden Ansprüche, **dadurch gekennzeichnet, dass** Falten und Überlappungsbereiche ganz über einen Seitenwandbereich (12) der Schale (2), insbesondere bis zu oder einschließlich einem Deckelflanschbereich (14) verlaufen.

7. Kunststoffschale (2), die eine mit einer Barrierefolie (8) versehene Wand (4) aufweist, wobei die Barrierefolie (8) an einer Innenseite der Wand (4) angeordnet ist, wobei die Barrierefolie (8) aus einem zunächst ebenen Zuschnitt überlappend gefaltet und in Überlappungsbereichen gesiegelt ist.

8. Kunststoffschale nach Anspruch 7, **dadurch gekennzeichnet, dass** die Kunststoffschale (2) mit einer weiteren Kunststoffschale, die einen Deckel (20) bildet, verschlossen ist, indem Deckelflanschabschnitte (14) von Kunststoffschale (2) und Deckel (20) miteinander verrastet und/oder versiegelt sind.

9. Kunststoffschale nach Anspruch 7 oder 8, **dadurch gekennzeichnet, dass** Falten und Überlappungsbereiche ganz über einen Seitenwandbereich (12), insbesondere bis zu oder einschließlich einem Deckelflanschbereich (14), verlaufen.

10. Kunststoffschale nach einem der vorangehenden Ansprüche, **dadurch gekennzeichnet, dass** ein Etikett (16) an einer Außenseite der Kunststoffschale angesiegelt ist, das Barriereeigenschaften haben kann.

11. Kunststoffschale nach Anspruch 10, **dadurch gekennzeichnet, dass** das Etikett (16) einen Teilbereich der Wand überdeckt, der nicht mit Barrierefolie versehen ist.
